# DEMANDE DE BREVET EUROPEEN

(11) **EP 0 882 561 A1**
(43) Date de publication de la demande: **09.12.1998**
(21) Numéro de dépôt: 98401341.7
(22) Date de dépôt: 05.06.1998
(51) Int. Cl.: B29C 44/12, B29C 44/14, B60R 13/08

(54) **Procédé pour la réalisation d'un panneau insonorisant**

(30) Priorité: 06.06.1997 FR 9707022
(71) Demandeur: CENTRE D'ETUDES ET RECHERCHE POUR L'AUTOMOBILE ( CERA), F-51100 Reims (FR)
(72) Inventeur: Bonhomme, Patrick, 51500 Taissy (FR); Deprez, Alain, 51140 Jonchery/Vesle (FR)
(74) Mandataire: Geismar, Thierry

(57) **Abrégé**

L'invention concerne un procédé pour la réalisation d'un panneau insonorisant, notamment pour habitacle de véhicule automobile, dans lequel on associe une plaque massive (2) à un support en mousse (3).

Ladite plaque massive est réalisée en polyuréthane chargé moulé à basse pression dans un moule ayant la forme dudit panneau. Des organes fonctionnels peuvent être moulés d'une seule pièce avec cette plaque massive.

## Description

La présente invention concerne un procédé pour la réalisation d'un panneau insonorisant, et plus particulièrement un tel procédé dans lequel on associe une plaque massive à un support en mousse.

De tels panneaux sont connus, par exemple, dans l'industrie automobile où ils sont utilisés pour isoler l'habitacle de l'environnement extérieur. A l'intérieur de l'habitacle, ils peuvent se présenter sous la forme de tapis pour isoler les occupants des bruits provoqués par le roulement du véhicule sur la chaussée. On en dispose également derrière la planche de bord pour atténuer le bruit occasionné par le moteur et la boîte de vitesse.

Ces panneaux sont actuellement réalisés sous la forme d'une plaque massive en matière plastique de densité élevée généralement appelée masse lourde, ou encore septum, associée à un support en mousse. Cet ensemble se comporte vis à vis des vibrations du plancher métallique de l'habitacle ou du tablier séparant cet habitacle du compartiment moteur, comme un ressort, la mousse, associé à une pièce d'inertie, la plaque massive. Il en résulte un amortissement des vibrations et donc un effet de réduction du bruit.

Jusqu'à présent, les plaques massives ont été réalisées à partir d'un flan de matière thermoplastique chargée d'une densité de l'ordre de 1,7 à 2,4, cette densité étant relativement variable. Ce flan est mis en forme par un procédé de thermoformage dans lequel il est chauffé puis aspiré sous vide dans un moule.

Ce procédé présente un certain nombre d'inconvénients.

En premier lieu, il est inhérent aux procédés de thermoformage par aspiration sous vide de conduire à la production de chutes périphériques à la pièce réalisée. Il en résulte des pertes de matière parfois importantes.

Par ailleurs, les matières thermoplastiques utilisées sont d'une famille de matières plastiques différente de celle de la mousse. Lors du recyclage, il est donc nécessaire de séparer cette dernière de la plaque massive, ce qui augmente les coûts de recyclage.

Un autre inconvénient réside dans le fait que les matières thermoplastiques utilisées sont très visqueuses. On est donc amené à employer des plastifiants. Or, ceux-ci ont pour caractéristique de se vaporiser, lorsqu'ils sont amenés à une température relativement élevée telle que celle qui peut régner dans un habitacle de véhicule automobile exposé au soleil. Ce plastifiant vaporisé a alors tendance à se condenser sur les vitres et à produire le phénomène appelé "fogging", produisant une certaine opacification des vitres de l'habitacle.

En outre, les flans thermoplastiques utilisés jusqu'à présent sont réalisés par injection à haute pression, ce qui est connu pour être un procédé onéreux.

Un autre inconvénient du procédé connu réside dans le fait que le flan de matière thermoplastique utilisé pour la réalisation de la plaque massive, est d'épaisseur constante. Il est donc impossible de maîtriser l'épaisseur du produit final. Lorsque ce dernier sera relativement plat, son épaisseur sera, elle aussi, relativement constante. En revanche, lorsqu'on imposera au flan des déformations conduisant à des creux importants, l'épaisseur de la pièce finale sera fortement diminuée dans les parties en creux.

Enfin, étant donné le coût élevé de la matière première utilisée pour réaliser ces flans thermoplastiques, on emploie des produits recyclés conduisant à des flans dont l'homogénéité et la reproductibilité des propriétés, notamment mécaniques, est relativement faible.

La présente invention vise à pallier ces inconvénients.

A cet effet, l'invention a tout d'abord pour objet un procédé pour la réalisation d'un panneau insonorisant, notamment pour habitacle de véhicule automobile, dans lequel on associe une plaque massive à un support en mousse, caractérisé par le fait que ladite plaque massive est réalisée en polyuréthane chargé moulé à basse pression dans un moule ayant la forme dudit panneau.

Il en résulte en premier lieu un gain de matière, du fait qu'un tel procédé ne conduit évidemment pas à la production de chutes périphériques à la pièce moulée.

Par ailleurs, le polyuréthane appartient à la même famille que la mousse. Il en résulte une meilleure recyclabilité du panneau insonorisant, sans que soit nécessaire une séparation de ses composants.

En outre, la viscosité des polyuréthanes étant faible, il n'est pas nécessaire d'employer de plastifiants, ce qui élimine le problème du "fogging".

Les coûts de mise en oeuvre sont, par ailleurs, également diminués puisque la plaque de polyuréthane peut être moulée à basse pression.

Un autre avantage de l'invention réside dans le fait que l'épaisseur de la plaque massive est parfaitement contrôlée. Elle résulte, en effet, uniquement de l'entrefer entre les différentes parties du moule et est, en particulier, indépendante des formes à obtenir.

Le panneau insonorisant obtenu présente de plus l'avantage d'être relativement souple. Sa mise en place et sa dépose en sont facilitées.

Enfin, la plaque de polyuréthane moulée n'est pas obtenue à partir de matériaux recyclés. Il en résulte des produits beaucoup plus homogènes dont les caractéristiques, en particulier la densité, sont précisément déterminées.

Dans un premier mode de réalisation, on pulvérise séparément dans le moule la charge et le polyuréthane. Cette pulvérisation est ainsi réalisée à partir de deux buses, et s'effectue alors, de préférence, en un point fixe du moule. Cette solution est donc particulièrement adaptée à la réalisation de pièces de dimensions relativement faibles.

Dans un autre mode de réalisation, on mélange la charge et le polyuréthane dans une tête de pulvérisation, et on pulvérise le mélange dans le moule. La tête de pulvérisation peut alors être mobile, de manière à répartir à volonté dans le moule le mélange de polyuréthane et de charge. Cette solution est donc plus particulièrement adaptée à la réalisation de pièces de grande dimension.

La ou les têtes de pulvérisation peuvent, de toute manière, être fixes ou mobiles indépendamment du fait que le mélange est réalisé avant ou lors de la pulvérisation.

Dans un mode de réalisation particulier, la matière plastique à mousser est coulée directement sur la plaque massive, dans le moule même où celle-ci a été réalisée, le moussage étant réalisé dans ce moule après mise en place d'un nouveau poinçon adapté.

Grâce à un tel mode de réalisation, il est possible d'obtenir des cadences de fabrication élevées et de réduire les investissements liés à la fabrication des moules.

L'invention a également pour objet un moule pour la réalisation d'un panneau insonorisant dans lequel une plaque massive est associée à un support en mousse, caractérisé par le fait qu'il comprend une matrice et un premier poinçon dont l'entrefer est agencé pour le moulage d'une plaque massive en polyuréthane chargé, et un deuxième poinçon agencé pour délimiter avec ladite plaque massive maintenue dans ladite matrice, un volume pour le moussage d'une matière appropriée.

L'invention a également pour objet un panneau insonorisant, caractérisé par le fait qu'il est réalisé par un procédé tel que décrit ci-dessus.

Plus particulièrement, des organes fonctionnels peuvent être moulés d'une seule pièce avec la plaque massive.

On simplifie ainsi la fabrication des panneaux, en supprimant des opérations de montage d'organes tels que des inserts ou des clips. On verra également que l'on améliore ainsi les propriétés acoustiques du panneau.

On décrira maintenant, à titre d'exemple non limitatif, un mode de réalisation particulier de l'invention, en référence aux dessins schématiques annexés dans lesquels :
- Les figures 1a à 1d illustrent quatre phases d'un procédé selon l'invention;
- la figure 2 est une vue en coupe du panneau insonorisant obtenu par ce procédé;
- la figure 3 est une vue en coupe d'un tel panneau insonorisant muni d'une agrafe de câblage;
- la figure 4 est une vue en coupe d'un autre panneau insonorisant muni d'un élément de fixation; et
- la figure 5 est également une vue en coupe d'un panneau insonorisant selon l'invention comportant localement une surépaisseur.

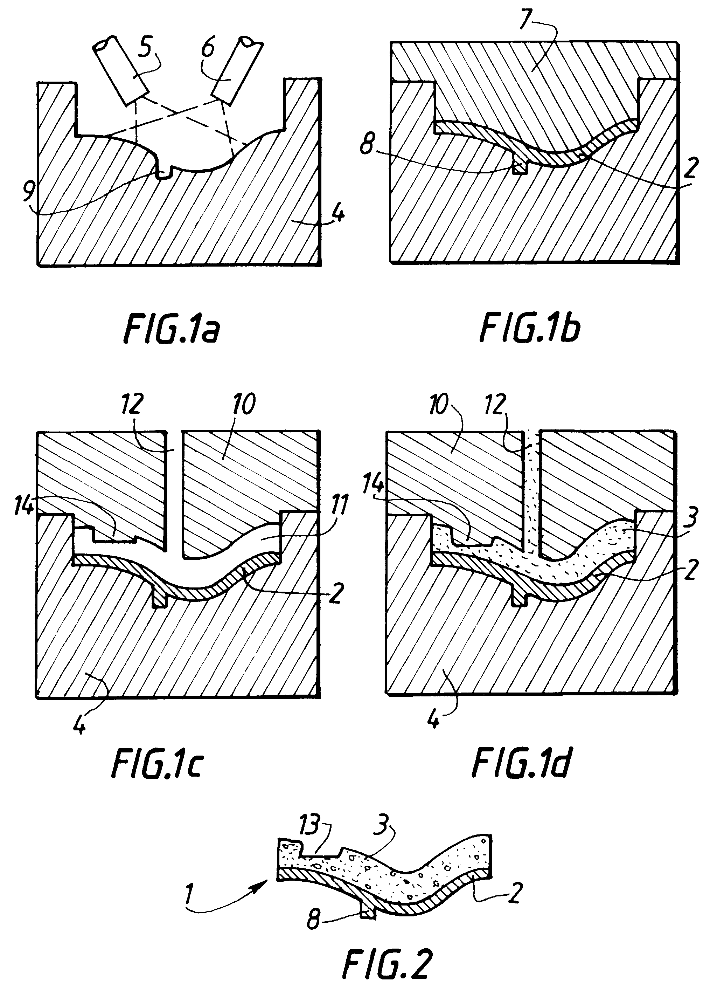

Le procédé selon l'invention comporte, d'une manière générale, deux étapes principales. L'étape des figures 1a et 1b est celle où est réalisée la masse lourde 2 du panneau 1, et l'étape des figures 1c et 1d est celle où est réalisée la mousse 3 de ce panneau.

La première phase de la première étape est représentée à la figure 1a. Au cours de cette phase, le fond de la matrice 4 d'un moule est garnie d'un mélange de polyuréthane et d'une charge. Dans le cas présent, le polyuréthane est délivré à partir d'une buse 5, et la charge à partir d'une buse 6, qui peuvent être fixes notamment dans le cas d'un moule de faible dimension, ou mobiles. On observera que le mélange du polyuréthane et de la charge est réalisé dans le moule lui-même, mais on pourrait en variante réaliser ce mélange préalablement et le pulvériser à l'aide d'une buse unique.

La seconde phase de la première étape, représentée à la figure 1b, consiste à fermer le moule en couvrant la matrice 4 par un premier poinçon 7. Le mélange de polyuréthane et de charge est ainsi comprimé à basse pression pour former la masse lourde 2.

On remarque que ce procédé permet de contrôler à volonté l'épaisseur de cette masse lourde. A titre d'exemple, elle forme ici une nervure 8 correspondant à une rainure 9 réalisée dans la matrice 4. Bien entendu, des surépaisseurs telle que la rainure 8 pourraient également être formées de l'autre côté de la masse lourde 2, en réalisant des renfoncements dans le poinçon 7. Dans ce dernier cas, les surépaisseurs seraient incluses dans la mousse 3.

Après moulage de la masse lourde 2, le poinçon 7 est retiré et remplacé sur la matrice 4 par un deuxième poinçon 10. Comme montré à la figure 1c, le poinçon 10 ménage au-dessus de la masse lourde 2, un volume de moussage 11 communiquant avec un canal d'alimentation 12.

Comme montré à la figure 1d, de la matière plastique est ensuite injectée dans le volume 11 par le canal 12, et cette matière plastique forme dans le volume 11 la mousse 3.

On remarquera que l'épaisseur de la mousse 3 peut être contrôlée de même que celle de la masse lourde 2. La mousse 3 forme ici un renfoncement 13 dû à une partie 14 du poinçon 10 en saillie dans le volume de moussage 11.

Après moussage de la matière plastique et formation de la mousse 3, le panneau insonorisant 1 de la figure 2 est éjecté du moule.

L'invention permet, par conséquent, de former des panneaux insonorisants dont, entre autres avantages, l'épaisseur de la masse lourde peut être parfaitement contrôlée. On va voir maintenant qu'il en résulte la possibilité d'intégrer à la masse lourde des fonctions qui, dans l'art antérieur, devaient être remplies par des organes rapportés.

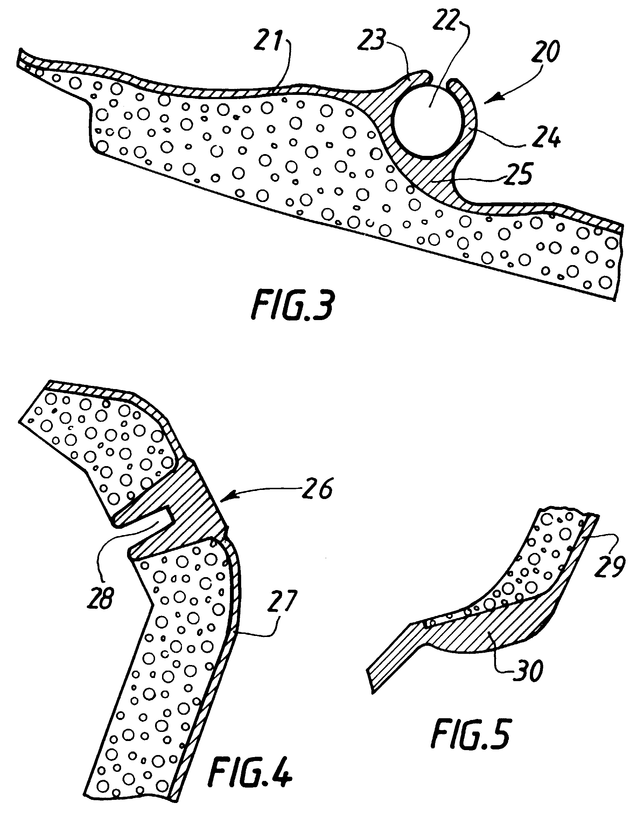

La figure 3 montre comment une agrafe 20 peut être réalisée d'une seule pièce avec la masse lourde 21. Cette agrafe 20, destinée ici au maintien d'un câble 22, est formée de deux saillies 23 et 24 s'étendant à partir d'une zone renforcée 25 de la masse lourde 21. On évite ainsi l'utilisation d'une agrafe séparée, métallique ou en matière plastique, elle-même clipsée dans un orifice ménagée dans le panneau insonorisant.

Dans la figure 4, un clip ou un insert de fixation de l'art antérieur est remplacé par un bloc 26 moulé d'une seule pièce avec la masse lourde 27. Le bloc 26 traverse entièrement le panneau insonorisant et comporte, côté mousse, un trou 28 remplaçant celui du clip ou de l'insert pour la fixation du panneau.

On observera que, dans les deux modes de réalisation qui viennent d'être décrits, l'invention présente un avantage supplémentaire. En effet, on supprime la nécessité rencontrée dans l'art antérieur de prévoir des orifices de clipsage dans le panneau insonorisant. Il en résulte une meilleure isolation phonique.

La figure 6 illustre une autre application de l'invention, dans laquelle le panneau représenté est un panneau isolant de tablier. Ici, la masse lourde 29 possède le long de sa bordure une surépaisseur 30 réalisée d'une seule pièce avec elle. Cette surépaisseur remplace dans ce cas un insert qui, dans l'art antérieur, est partiellement noyé dans la mousse du panneau.

## Revendications

1. Procédé pour la réalisation d'un panneau insonorisant (1), notamment pour habitacle de véhicule automobile, dans lequel on associe une plaque massive (2) à un support en mousse (3), caractérisé par le fait que ladite plaque massive est réalisée en polyuréthane chargé moulé à basse pression dans un moule ayant la forme dudit panneau.

2. Procédé selon la revendication 1, dans lequel on pulvérise séparément dans le moule la charge et le polyuréthane.

3. Procédé selon la revendication 1, dans lequel on mélange la charge et le polyuréthane dans une tête de pulvérisation, et on pulvérise le mélange dans le moule.

4. Procédé selon l'une quelconque des revendications 1 à 3, dans lequel on pulvérise le polyuréthane à partir d'un point fixe.

5. Procédé selon l'une quelconque des revendications 1 à 3, dans lequel on pulvérise le polyuréthane à partir d'une tête mobile.

6. Procédé selon l'une quelconque des revendications 1 à 5, dans lequel la matière plastique à mousser est coulée directement sur la plaque massive (2), dans le moule même où celle-ci a été réalisée, le moussage (11) étant réalisé dans ce moule après mise en place d'un nouveau poinçon (10) adapté.

7. Moule pour la réalisation d'un panneau insonorisant dans lequel une plaque massive (2) est associée à un support en mousse (3), caractérisé par le fait qu'il comprend une matrice (4) et un premier poinçon (7) dont l'entrefer est agencé pour le moulage d'une plaque massive (2) en polyuréthane chargé, et un deuxième poinçon (10) agencé pour délimiter avec ladite plaque massive maintenue dans ladite matrice, un volume pour le moussage d'une matière appropriée.

8. Panneau insonorisant, notamment pour habitacle de véhicule automobile, caractérisé par la fait qu'il est réalisé par un procédé selon l'une quelconque des revendications 1 à 6.

9. Panneau insonorisant selon la revendication 8, dans lequel des organes fonctionnels (20;26;30) sont moulés d'une seule pièce avec ladite plaque massive.
